# EUROPÄISCHE PATENTSCHRIFT

(11) **EP 2 795 693 B1**
(45) Veröffentlichungstag und Bekanntmachung des Hinweises auf die Patenterteilung: **03.10.2018**
(21) Anmeldenummer: 12784538.6
(22) Anmeldetag: 29.10.2012
(51) Int. Cl.: H01M 2/26, H01M 10/04, H01M 10/18

(54) **ELEKTRISCHES ENERGIESPEICHERMODUL UND VERFAHREN ZUM HERSTELLEN EINES ELEKTRISCHEN ENERGIESPEICHERMODULS**
ELECTRICAL ENERGY STORAGE MODULE AND METHOD FOR PRODUCING AN ELECTRICAL ENERGY STORAGE MODULE
MODULE ACCUMULATEUR D'ÉNERGIE ÉLECTRIQUE ET PROCÉDÉ DE FABRICATION D'UN MODULE ACCUMULATEUR D'ÉNERGIE ÉLECTRIQUE

(30) Priorität: 19.12.2011 DE 102011089086
(43) Veröffentlichungstag der Anmeldung: 29.10.2014
(73) Patentinhaber: Robert Bosch GmbH, 70442 Stuttgart (DE)
(72) Erfinder: KESSLER, Martin, 73527 Schwaebisch Gmuend (DE); DOEGE, Volker, 89561 Dischingen (DE); TIEFENBACH, Andy, 71665 Vaihingen-Horrheim (DE); SCHMIDT, Alexander, 78166 Donaueschingen (DE)
(86) Internationale Anmeldenummer: PCT/EP2012/071355
(87) Internationale Veröffentlichungsnummer: WO 2013/091958

(56) Entgegenhaltungen:
- WO-A1-97/22466
- WO-A1-2007/082863
- DE-A1-102008 001 283
- US-A- 2 745 894
- US-A- 3 353 999
- US-A- 4 374 186
- US-A1- 2009 239 130

## Beschreibung

Die Erfindung betrifft ein elektrisches Energiespeichermodul und ein Verfahren zum Herstellen eines elektrischen Energiespeichermoduls.

### Stand der Technik

Üblicherweise wird elektrischen Energiespeicherzellen Gleichstrom entnommen bzw. Gleichstrom in diese eingespeist. Daher ist der bisher bekannte Aufbau von Energiespeicherzellen auf die Optimierung der Ohm'schen Innenwiderstände und der spezifischen Energie- bzw. Leistungsdichte der Energiespeicherzellen ausgelegt.

In vielen Anwendungen elektrischer Energiespeicherzellen werden Speicherzellen in serieller oder paralleler Anordnung miteinander zu Batteriemodulen verschaltet, um gewünschte Ausgangsparameter wie Gesamtspannung, Spannungsbereich, Energieinhalt oder Leistungsdichte einzustellen. Werden aus derartigen Energiespeicherzellen Ströme mit steigendem Wechselanteil entnommen, steigt frequenzabhängig der Einfluss der verteilten Induktivität der Energiespeicherzellen. Außerdem können bei Betriebsfrequenzen im kHz-Bereich durch den Skineffekt Verluste in den Strom tragenden Bereichen sowie Wirbelströme in elektrisch leitfähigen Flächen, beispielsweise im Gehäuse, auftreten.

Die Druckschrift DE 10 2010 035 114 A1 offenbart beispielsweise eine Batterieeinheit mit einer Vielzahl von Zelleneinheiten, welche jeweils Akkumulatorzellen aufweisen, die über Busschienen elektrisch gekoppelt sind.

Es besteht ein Bedarf an Energiespeichermodulen aus einer oder mehreren Energiespeicherzellen, welche hinsichtlich der Entnahme von Wechselströmen hoher Frequenz geringere Verluste aufweisen und somit den Wirkungsgrad des die Energiespeicherzellen einsetzenden Systems verbessern.

### Offenbarung der Erfindung

Die vorliegende Erfindung schafft gemäß einem Aspekt ein elektrisches Energiespeichermodul, mit den Merkmalen von Anspruch 1 oder 3.

Gemäß einem weiteren Aspekt schafft die vorliegende Erfindung ein Verfahren zum Herstellen eines elektrischen Energiespeichermoduls, mit den Merkmalen von Anspruch 8 oder 9.

### Vorteile der Erfindung

Es ist eine Idee der vorliegenden Erfindung, die Verluste, die durch bei der Ansteuerung eines elektrischen Energiespeichermoduls auftretenden Wirbelströme im Inneren des Energiespeichermoduls und/oder in dessen Gehäuse verursacht werden, mithilfe eines geeigneten internen Aufbaus des Energiespeichermoduls mit möglichst geringer interner Zellinduktivität zu reduzieren. Dazu werden die Energiespeicherzellen mit den Merkmalen von Anspruch 1 oder 3 mit Zellgehäusen versehen, welche Gehäuseflächen aufweisen, die Zellpolanschlüsse der eingeschlossenen Energiespeicherzellen darstellen. Über die flächige Kontaktierung der Zellpolanschlüsse der Zellgehäuse benachbarter Energiespeicherzellen können Speicherzellstapel geschaffen werden, die als Grundlage des elektrischen Energiespeichermoduls dienen. Dabei sind die Kontaktflächen zwischen den Zellgehäusen maximal groß, so dass einerseits die Länge der Strompfade durch das Energiespeichermodul minimiert und andererseits die zugehörigen Querschnittsflächen maximiert werden.

Ein erheblicher Vorteil einer derartigen Anordnung besteht darin, dass die Verlustenergie insbesondere bei der Entnahme von Wechselstrom hoher Frequenz aus dem Energiespeichermodul erheblich reduziert werden kann. Insbesondere bei Batteriesystemen mit integriertem Umrichter, sogenannten Batteriedirektumrichtern ("battery direct inverter", BDI), bei denen ein schneller Wechsel der Stromführung durch ein Batteriemodul zur Variation der Spannung erfolgt, ist diese Reduzierung der Verlustenergie von großem Vorteil. Auch hinsichtlich der Entnahme von Gleichstrom sind die Energiespeichermodule vorteilhaft, da sie reduzierte Ohm'sche Verluste aufgrund niederohmiger Kontaktierungen aufweisen.
Ein weiterer Vorteil besteht darin, dass die Kurzzeitdynamik derartiger Energiespeichermodule verbessert wird, indem die Verzögerung der Energie- bzw. Lastabgabe der Energiespeicherzellen nach Lastwechseln minimiert wird. Dadurch kann in vorteilhafter Weise auf ansonsten möglicherweise ausgleichende Bauelemente wie beispielsweise Pufferkondensatoren verzichtet werden, was den Bauraumbedarf sowie die Fertigungskosten von Energiespeicherzellen bzw. -module einsetzenden Bauteilen senken kann.
Überdies kann durch die Vermeidung von induktiven Verlustanteilen durch die Energiespeicherzellen die elektromagnetische Verträglichkeit (EMV) verbessert werden, da die emittierten elektromagnetischen Felder vermindert und Störeinflüsse auf benachbarte Elektronikbauteile verringert werden können. Ferner werden Ohm'sche Verluste, beispielsweise aufgrund des Skineffekts, weitestgehend reduziert, was vorteilhafter Weise mit erhöhtem Wirkungsgrad und geringerer Wärmeentwicklung einhergeht.

Gemäß der Erfindung weist das Energiespeichermodul weiterhin ein flächiges Kontaktelement auf, welches eine an einer ersten Endfläche des Speicherzellstapels angeordnete Energiespeicherzelle an dem der ersten Endfläche zugewandten Zellpolanschluss elektrisch kontaktiert. Gemäß der Erfindung, weist das Energiespeichermodul weiterhin einen ersten flächigen Polkontaktanschluss auf, welcher eine an einer zweiten, der ersten Endfläche gegenüberliegenden Endfläche des Speicherzellstapels angeordnete Energiespeicherzelle an dem der zweiten Endfläche zugewandten Zellpolanschluss elektrisch kontaktiert.

Gemäß der Erfindung weist das Energiespeichermodul weiterhin einen flächigen Kontaktverbinder auf, welcher an einer Seitenfläche des Speicherzellstapels angeordnet ist, und welcher das flächige Kontaktelement elektrisch kontaktiert.
Gemäß einer weiteren Ausführungsform kann das erfindungsgemäße Energiespeichermodul weiterhin einen ersten flächigen Polanschluss , welcher an einer Seitenfläche des Speicherzellstapels angeordnet ist, und welcher den ersten flächigen Polkontaktanschluss elektrisch kontaktiert, einen zweiten flächigen Polkontaktanschluss, welcher an der zweiten Endfläche des Speicherzellstapels flächig parallel zu dem ersten flächigen Polkontaktanschluss angeordnet ist, und welcher den flächigen Kontaktverbinder elektrisch kontaktiert, und einen zweiten flächigen Polanschluss aufweisen, welcher parallel zu dem ersten flächigen Polanschluss entlang der Seitenfläche des Speicherzellstapels geführt ist, und welcher den ersten flächigen Polkontaktanschluss elektrisch kontaktiert.

Gemäß der Erfindung weist das erfindungsgemäße Energiespeichermodul weiterhin zwei an den Seitenflächen aneinander angrenzende Speicherzellstapel auf, jeweils mit einer Vielzahl von Energiespeicherzellen, welche jeweils Elektrodenelemente und ein Zellgehäuse aufweisen. Dabei sind die Elektrodenelemente mit jeweils einem von zwei an gegenüberliegenden Seitenflächen des Zellgehäuses ausgebildeten Zellpolanschlüssen elektrisch verbunden, und die Vielzahl von Energiespeicherzellen in den zwei Speicherzellstapeln entlang der Erstreckungsrichtung der Speicherzellstapel eine unterschiedliche Abfolge der Polaritäten der Zellpolanschlüsse aufweisen.

Gemäß der Erfindung weist das Energiespeichermodul weiterhin ein flächiges Kontaktelement auf, welches zwei an einer ersten Endfläche der zwei Speicherzellstapel angeordnete Energiespeicherzellen an den der ersten Endfläche zugewandten Zellpolanschlüssen elektrisch miteinander verbindet.

Gemäß der Erfindung weist das Energiespeichermodul weiterhin einen ersten flächigen Polkontaktanschluss auf, welcher eine an einer zweiten, der ersten Endfläche gegenüberliegenden Endfläche des einen der beiden Speicherzellstapel angeordnete Energiespeicherzelle an dem der zweiten Endfläche zugewandten Zellpolanschluss elektrisch kontaktiert, und einen zweiten flächigen Polkontaktanschluss aufweist, welcher eine an der zweiten Endfläche des anderen der beiden Speicherzellstapel angeordnete Energiespeicherzelle an dem der zweiten Endfläche zugewandten Zellpolanschluss elektrisch kontaktiert.

Gemäß einer weiteren Ausführungsform kann das erfindungsgemäße Energiespeichermodul weiterhin eine Isolationsschicht aufweisen, welche zwischen dem ersten flächigen Polkontaktanschluss und dem zweiten flächigen Polkontaktanschluss zum galvanischen Isolieren der Polkontaktanschlüsse angeordnet ist.

Gemäß einer weiteren Ausführungsform des erfindungsgemäßen Energiespeichermoduls können die Zellgehäuse der Energiespeicherzellen einen Teilbereich zwischen den Zellpolanschlüssen aufweisen, welcher elektrisch nicht oder nur geringfügig leitfähig ist.

Gemäß einer weiteren Ausführungsform des erfindungsgemäßen Energiespeichermoduls können die Elektrodenelemente der Energiespeicherzellen spiralförmig ineinander gewickelt sind.

Gemäß einer weiteren Ausführungsform des erfindungsgemäßen Energiespeichermoduls können die Elektrodenelemente der Energiespeicherzellen als Elektrodenstapel ausgebildet sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung einer elektrischen Energiespeicherzelle gemäß einer Ausführungsform der Erfindung;
- Fig. 2: eine schematische Darstellung einer elektrischen Energiespeicherzelle gemäß einer weiteren Ausführungsform der Erfindung;
- Fig. 3: eine schematische Darstellung eines elektrischen Energiespeichermoduls gemäß einer weiteren Ausführungsform der Erfindung;
- Fig. 4: eine schematische Darstellung eines elektrischen Energiespeichermoduls gemäß einer weiteren Ausführungsform der Erfindung;
- Fig. 5: eine schematische Darstellung eines elektrischen Energiespeichermoduls gemäß einer weiteren Ausführungsform der Erfindung; und
- Fig. 6: eine schematische Darstellung eines Verfahrens zum Herstellen eines elektrischen Energiespeichermoduls gemäß einer weiteren Ausführungsform der Erfindung.

Die im Folgenden verwendete Richtungsterminologie, das heißt, Begriffe wie "links", "rechts", "oben", "unten", "vorne", "hinten", "darüber", "dahinter" und dergleichen, wird lediglich zum besseren Verständnis der Zeichnungen verwendet, und soll in keinem Fall eine Beschränkung der Allgemeinheit darstellen. Gleiche Bezugszeichen bezeichnen im Allgemeinen gleichartige oder gleich wirkende Komponenten.

Elektrische Energiespeicherzellen im Sinne der vorliegenden Erfindung umfassen alle Einrichtungen, welche über einen vordefinierten Zeitraum elektrische Energie speichern und über einen weiteren Zeitraum wieder abgeben können. Energiespeicherzellen im Sinne der vorliegenden Erfindung umfassen dabei alle Arten von sekundären und primären Energiespeichern, insbesondere elektrisch kapazitive, elektrochemische (faradaysche) sowie kombiniert arbeitende Speichertypen. Die betrachteten Zeiträume können dabei von Sekunden bis hin zu Stunden, Tagen oder Jahren umfassen. Elektrische Energiespeicherzellen können beispielsweise Lithium-Ionen-Zellen, Lithium-Polymer-Zellen, Nickel-Metallhydrid-Zellen, Ultrakondensatoren, Superkondensatoren, Powerkondensatoren, BatCaps, Akkumulatoren auf der Basis von Blei, Zink, Natrium, Lithium, Magnesium, Schwefel oder anderen Metallen, Elementen oder Legierungen, oder ähnliche Systeme umfassen. Die Funktionalität der von der Erfindung umfassten elektrischen Energiespeicherzellen kann dabei auf Interkalationselektroden, Reaktionselektroden oder Legierungselektroden in Kombination mit wässrigen, aprotischen oder polymeren Elektrolyten beruhen.

Der Aufbau von elektrischen Energiespeicherzellen im Sinne der vorliegenden Erfindung kann dabei sowohl unterschiedliche äußere Aufbauformen, wie beispielsweise zylindrische Formen, prismatische Formen oder sogenannte "Pouch"-Formen, als auch unterschiedliche Elektrodenaufbauten, wie beispielsweise gewickelte, gestapelte, gefaltete oder sonstige Aufbauten, umfassen.

Elektrodenelemente im Sinne der vorliegenden Erfindung können aus verschiedenen elektrisch leitfähigen, beispielsweise metallischen Materialien hergestellt sein. Elektrodenelemente im Sinne der vorliegenden Erfindung können beschichtet, dreidimensional befüllt oder/und mit großer aktiver Oberfläche hergestellt sein. Dabei können die flächigen Elektrodenelemente je nach Speichertechnologie unterschiedliche Abmessungen aufweisen, beispielsweise kann die Dicke von Elektrodenelementen Größenordnungen von wenigen µm bis etliche mm aufweisen. Die Elektrodenelemente können gefaltet, gestapelt oder gewickelt sein, und es kann vorgesehen sein, zwischen den Elektrodenelementen Isolations- oder Separationsschichten auszubilden, welche die Elektrodenelemente galvanisch voneinander trennen. Es kann auch möglich sein, die Elektrodenelemente in bipolarer Form aufzubauen. Die flächige Form der Elektrodenelemente kann quadratisch, rechteckig, rund, elliptisch oder beliebig anders gestaltet sein.

Elektrische Energiespeichermodule im Sinne der vorliegenden Erfindung umfassen Komponenten, welche eine oder mehrere elektrische Energiespeicherzellen aufweisen, die zum Beispiel in einem Gehäuse angeordnet sind, und wobei die elektrischen Energiespeicherzellen in geeigneter Weise elektrisch untereinander gekoppelt sind, um eine serielle oder parallele Verschaltung der Energiespeicherzellen zu gewährleisten. Elektrische Energiespeichermodule können dabei Modulanschlüsse aufweisen, an welchen eine von der internen Verschaltung der elektrischen Energiespeicherzellen des elektrischen Energiespeichermoduls abhängige Ausgangsspannung abgreifbar ist.

Gehäuse im Sinne der vorliegenden Erfindung umfassen alle Bauteile, welche eine Ausnehmung zur Aufnahme einer oder mehrerer elektrischer Energiespeicherzellen sowie der elektrisch leitfähigen Verschaltungselemente der elektrischen Energiespeicherzellen aufweisen, und welche die aufgenommenen Energiespeicherzellen und Elemente mechanisch und/oder elektrisch gegenüber der Außenwelt abschirmen können. Gehäuse können dabei elektrisch leitfähige Materialien, elektrisch nicht oder nur schlecht leitfähige Materialien oder Kombinationen aus Teilbereichen derartiger Materialien aufweisen, wie beispielsweise Kunststoffe, Metalle, Legierungen aus Metallen. Die Form und Größe der Gehäuse kann dabei an die aufgenommenen Energiespeicherzellen und Elemente angepasst sein.

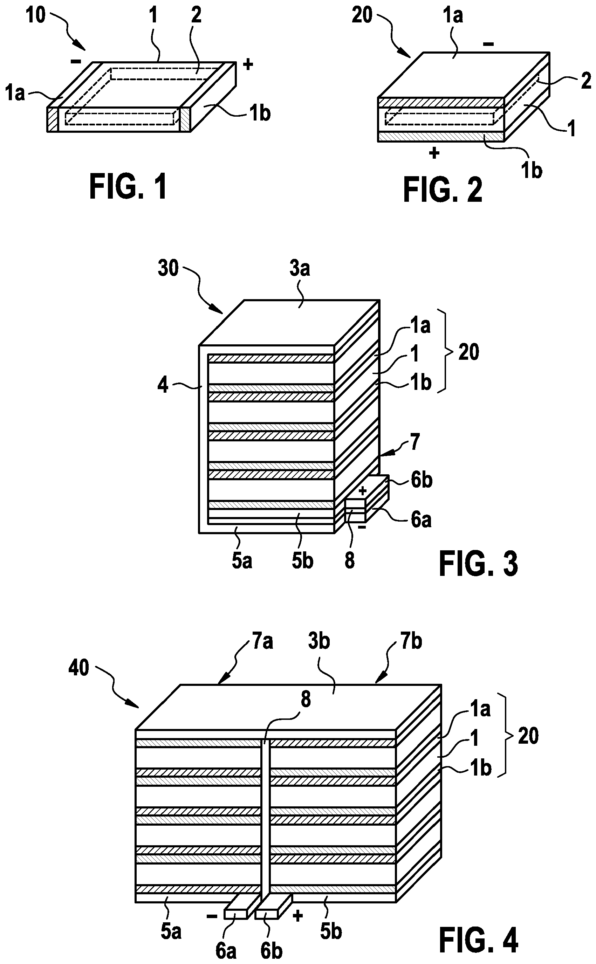

Fig. 1 zeigt eine schematische Darstellung einer elektrischen Energiespeicherzelle 10. Die elektrische Energiespeicherzelle 10 weist ein Zellgehäuse 1 auf, welches Elektrodenelemente 2 umschließt. Die Elektrodenelemente 2 sind in Fig. 1 nur schematisch angedeutet. Das Zellgehäuse 1 weist zwei an gegenüberliegenden Seitenflächen des Zellgehäuses 1 liegende Zellpolanschlüsse 1a und 1b auf, welche jeweils mit Elektrodenelementen 2 unterschiedlicher Polarität elektrisch verbunden sind. Beispielsweise kann der Zellpolanschluss 1a mit Elektrodenelementen negativer Polarität verbunden sein, während der Zellpolanschluss 1b mit Elektrodenelementen positiver Polarität verbunden sein kann. Die Zellpolanschlüsse 1a und 1b sind im Beispiel der Fig. 1 links und rechts an den flachen Seitenflächen eines prismatischen Zellgehäuses 1 angeordnet. Gleichermaßen können die Zellpolanschlüsse 1a und 1b auch vorne und hinten an den flachen Seitenflächen des prismatischen Zellgehäuses 1 angeordnet sein.

Die Zellpolanschlüsse 1a und 1b können komplette Zellgehäuseflächen des Zellgehäuses 1 sein, wie beispielsweise Boden-, Mantel- oder Deckenfläche. Es kann alternativ auch möglich sein, dass die Zellpolanschlüsse 1a und 1b nur Teilflächen der jeweiligen Seitenflächen des Zellgehäuses 1 umfassen. Die Zellpolanschlüsse 1a und 1b sind jeweils galvanisch voneinander getrennt, beispielsweise durch einen Zwischenbereich des Zellgehäuses 1, welcher zwischen den Zellpolanschlüssen 1a und 1b liegt, und welcher nicht oder nur geringfügig elektrisch leitfähig ist.

Fig. 2 zeigt eine schematische Darstellung einer elektrischen Energiespeicherzelle 20. Die Energiespeicherzelle 20 unterscheidet sich von der Energiespeicherzelle 10 im Wesentlichen darin, dass die oben bzw. unten liegenden großflächigen Seitenflächen des Zellgehäuses 1 mit Zellpolanschlüssen 1a und 1b versehen sind. Im Übrigen gelten für die Komponenten der Energiespeicherzelle 20 die gleichen Erwägungen wie für die Energiespeicherzelle 10 in Fig. 1.

Die Energiespeicherzellen 10 und 20 der Fig. 1 und 2 weisen jeweils eine Vielzahl von Elektrodenelementen 2 auf. Die Elektrodenelemente 2 können beispielsweise spiralförmig ineinander gewickelte Elektroden, gestapelte Elektroden oder aufeinander gefaltete Elektroden aufweisen. Dabei können pro Energiespeicherzelle 10 bzw. 20 Elektrodenelemente verschiedener Polarität vorhanden sein, welche innerhalb der Energiespeicherzelle 10 bzw. 20 galvanisch voneinander getrennt sind. Die Elektrodenelemente können beispielsweise flache Schichten aus elektrisch leitfähigem Material sein, welche in einer kammartigen Struktur flächig ineinander verzahnt sind. Es kann auch möglich sein, dass die Elektrodenelemente durch Wickeln oder Falten eines Bandes aus geschichteten Elektrodenelementen in eine alternierende Stapelform gebracht worden sind. Es sollte dabei klar sein, dass eine Fülle an Möglichkeiten gibt, die Elektrodenelemente 2 in einer Energiespeicherzelle 10 bzw. 20 anzuordnen, und dass die Auswahl einer Anordnung von der verwendeten Speichertechnologie, den Randbedingungen hinsichtlich der äußeren Form der Energiespeicherzelle 10 bzw. 20 und/oder den zu erreichenden elektrischen Charakteristika der Energiespeicherzelle 10 bzw. 20 abhängig sein kann. Beispielsweise kann es vorteilhaft sein, die Elektrodenelemente 2 derart anzuordnen, dass das innere Volumen der Energiespeicherzellen 10 bzw. 20 maximal ausgenutzt wird.

Fig. 3 zeigt eine schematische Darstellung eines elektrischen Energiespeichermoduls 30, welches aus einer Vielzahl von Energiespeicherzellen, beispielsweise der Energiespeicherzellen 20 aus Fig. 2 aufgebaut ist. Die Energiespeicherzellen 20 sind in einem Speicherzellstapel 7 seriell derart angeordnet sind, dass jeweils zwei Zellpolanschlüsse 1a und 1b benachbarter Energiespeicherzellen 20 unterschiedlicher Polarität flächig miteinander elektrisch verbunden sind.

Das Energiespeichermodul 30 umfasst weiterhin ein flächiges Kontaktelement 3a, welches eine an einer ersten Endfläche des Speicherzellstapels 7 angeordnete Energiespeicherzelle 20 an dem der ersten Endfläche zugewandten Zellpolanschluss 1a elektrisch kontaktiert. Das Energiespeichermodul 30 umfasst weiterhin einen ersten flächigen Polkontaktanschluss 5b, welcher eine an einer zweiten, der ersten Endfläche gegenüberliegenden Endfläche des Speicherzellstapels 7 angeordnete Energiespeicherzelle 20 an dem der zweiten Endfläche zugewandten Zellpolanschluss 1b elektrisch kontaktiert. Durch diese Anordnung ergibt sich eine serielle Verschaltung von Energiespeicherzellen 20 in dem Speicherzellstapel 7, so dass eine Summe der Ausgangsspannungen der Energiespeicherzellen 20 zwischen dem flächigen Kontaktelement 3a und dem ersten flächigen Polkontaktanschluss 5b abgreifbar ist.

Vorzugsweise kontaktieren das flächige Kontaktelement 3a eine eine große Fläche des Zellpolanschlusses 1a der Energiespeicherzelle 20, so dass der resultierende ohmsche Widerstand minimiert wird. Die flächige Kontaktierung des Kontaktelements 3a kann beispielsweise über Schweiß-, Spritz-, Sputter- oder Klebeverfahren mit dem Zellpolanschluss 1a erreicht werden. Dabei kann es vorgesehen sein, den Überstand des Kontaktelements 3a über die vertikale Erstreckung der jeweiligen Schichten von Energiespeicherzellen 20 hinaus so gering wie möglich zu halten, um überflüssige Strompfade zu vermeiden.

Es kann vorgesehen sein, einen flächigen Kontaktverbinder 4 in dem Energiespeichermodul 30 auszugestalten, welcher an einer Seitenfläche des Speicherzellstapels 7 angeordnet ist, und das flächige Kontaktelement 3a elektrisch kontaktiert. Über den flächigen Kontaktverbindung 4 kann das Potential des flächigen Kontaktelements 3a entlang des Speicherzellstapels 7 zu der zweiten Endfläche heruntergeführt werden. Zwischen den Energiespeicherzellen 20 des Speicherzellstapels 7 und dem flächigen Kontaktverbinder 4 kann eine (nicht gezeigte) Isolationsschicht ausgestaltet sein, welche den flächigen Kontaktverbinder 4 galvanisch von den Energiespeicherzellen 20 des Speicherzellstapels 7 trennt.

Der flächige Kontaktverbinder 4 kann mit einem zweiten flächigen Polkontaktanschluss 5a elektrisch verbunden sein, welcher an der zweiten Endfläche des Speicherzellstapels 7 flächig parallel zu dem ersten flächigen Polkontaktanschluss 5b angeordnet ist. Die Polkontaktanschlüsse 5a und 5b können dabei flächig parallel zueinander entlang der Endfläche des Speicherzellstapels 7 geführt werden. An einer Seitenfläche des Speicherzellstapels 7 können flächige Polanschlüsse 6a und 6b ausgebildet werden, welche jeweils einen entsprechenden Polkontaktanschlüsse 5a und 5b elektrisch kontaktieren.

Die Polanschlüsse 6a und 6b können aus der Projektion des Speicherzellstapels 7 herausführen, so dass eine über die Polkontaktanschlüsse 5a und 5b anliegende Spannung des Energiespeichermoduls 30 abgegriffen werden kann. Die Polanschlüsse 6a und 6b können dabei jeweils flächige Elemente aufweisen, welche flächig parallel zueinander zu einer Endfläche des Speicherzellstapels 7 geführt werden. Im vorliegenden Beispiel der Fig. 3 sind die Polkontaktanschlüsse 6a und 6b auf die rechte Seite des Speicherzellstapels 7 geführt. Der Abstand der Polkontaktanschlüsse 6a und 6b zueinander kann dabei so gering wie möglich gewählt werden, um die durch die Polkontaktanschlüsse 6a und 6b eingeschlossene Durchflutungsfläche und damit die induktive Impedanz der Polkontaktanschlüsse 6a und 6b so gering wie möglich zu halten. Zwischen den Polkontaktanschlüssen 6a und 6b kann eine Isolationsschicht 8 angeordnet sein, welche die Polkontaktanschlüsse 5a und 5b galvanisch voneinander isoliert.

Fig. 4 zeigt eine schematische Darstellung eines elektrischen Energiespeichermoduls 40, welches aus einer Vielzahl von Energiespeicherzellen, beispielsweise der Energiespeicherzellen 20 aus Fig. 2 aufgebaut ist. Das Energiespeichermodul 40 weist zwei an den Seitenflächen aneinander angrenzende Speicherzellstapel 7a, 7b auf, die jeweils eine Vielzahl von Energiespeicherzellen 20 aufweisen. Die Energiespeicherzellen 20 in den zwei Speicherzellstapeln 7a und 7b sind entlang der von oben nach unten verlaufenden Erstreckungsrichtung der Speicherzellstapel 7a; 7b derart angeordnet, dass sie eine unterschiedliche Abfolge der Polaritäten der Zellpolanschlüsse 1a, 1b aufweisen, das heißt, dass die Energiespeicherzellen 20 des einen Speicherzellstapels 7a einen oben liegenden Zellpolanschluss 1b einer Polarität, beispielsweise positiver Polarität, aufweisen, während die Energiespeicherzellen 20 des anderen Speicherzellstapels 7b einen oben liegenden Zellpolanschluss 1a einer anderen Polarität, beispielsweise negativer Polarität, aufweisen. Zwei an einer ersten Endfläche der zwei Speicherzellstapel 7a und 7b angeordnete Energiespeicherzellen 20 sind an den der ersten Endfläche zugewandten Zellpolanschlüssen 1a elektrisch miteinander über eine flächiges Kontaktelement 3b miteinander verbunden. Auf diese Weise ergibt sich ein Energiespeichermodul 40, welches einen Strompfad aufweist, der von einer unteren Endfläche eines Speicherzellstapels durch den Speicherzellstapel nach oben, über das flächige Kontaktelement 3b zum anderen Speicherzellstapel und durch den anderen Speicherzellstapel wieder nach unten verläuft.

An dieser unteren Endfläche beider Speicherzellstapel 7a, 7b können jeweils flächige Polkontaktanschlüsse 5a und 5b ausgebildet sein, welche an dieser unteren Endfläche angeordnete Energiespeicherzellen 20 der jeweiligen Speicherzellstapel 7a, 7b an den dort gelegenen Zellpolanschlüssen 1b bzw. 1a elektrisch kontaktiert. Zwischen den Polkontaktanschlüssen 5a und 5b kann eine Isolationsschicht 8 vorgesehen sein, welche die Polkontaktanschlüsse 5a und 5b galvanisch gegeneinander isoliert. Die Isolationsschicht 8 kann dabei beispielsweise auch zwischen den beiden Speicherzellstapeln 7a, 7b zum galvanischen Isolieren der beiden Speicherzellstapel 7a, 7b entlang der angrenzenden Seitenflächen angordnet sein.

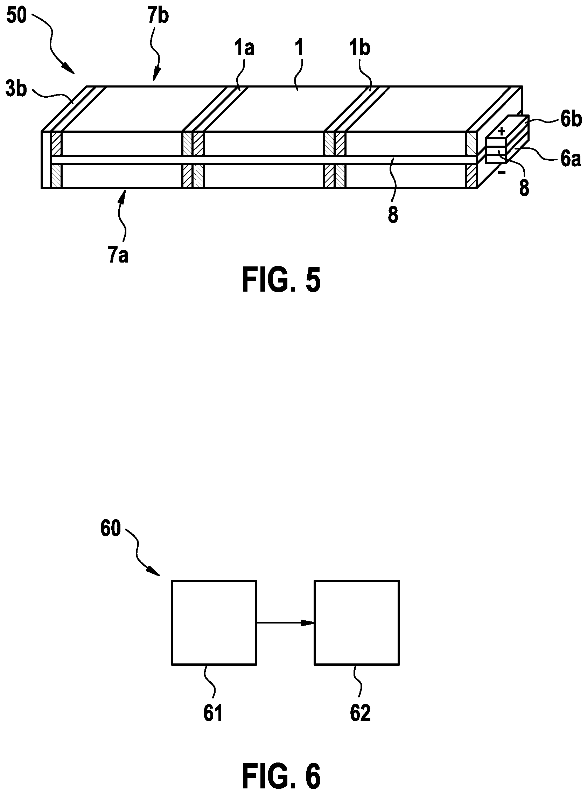

Fig. 5 zeigt eine schematische Darstellung eines elektrischen Energiespeichermoduls 50, welches aus einer Vielzahl von Energiespeicherzellen, beispielsweise der Energiespeicherzellen 10 aus Fig. 1 aufgebaut ist. Das Energiespeichermodul 50 weist zwei an den Seitenflächen aneinander angrenzende Speicherzellstapel 7a, 7b auf, die jeweils eine Vielzahl von Energiespeicherzellen 10 aufweisen. Das Energiespeichermodul 50 unterscheidet sich von dem Energiespeichermodul 40 in Fig. 4 im Wesentlichen nur darin, dass die Zellpolanschlüsse 1a, 1b der Energiespeicherzellen 10 an den Breitseiten der Energiespeicherzellen 10 statt an den Längsseiten gelegen sind. Die übrige Modultopologie des Energiespeichermoduls 50 entspricht ansonsten der Topologie des Energiespeichermoduls 40 aus Fig. 4.

Die Anzahl der Energiespeicherzellen 10 bzw. 20 in beiden Speicherzellstapeln 7a und 7b der Fig. 4 und 5 kann gleich sein. Die Anzahl der Energiespeicherzellen 10 bzw. 20 ist in Fig. 4 und 5 nur beispielhaft, und es kann jede andere Anzahl ebenso möglich sein.

In den Fig. 3 bis 5 ist jeweils aus Gründen der Übersichtlichkeit kein Modulgehäuse dargestellt, obgleich die Energiespeichermodule 30, 40 und 50 über entsprechende Modulgehäuse verfügen können, welche eine mechanische und/oder elektrische Abschirmung des jeweiligen Energiespeichermoduls gegenüber der Außenwelt gewährleisten können.

Insgesamt zeigen die Fig. 3 bis 5 lediglich beispielhafte Ausgestaltungsformen von Energiespeichermodulen. Variationen und Modifikationen können dabei unter Berücksichtigung von zweckbehafteten Konstruktionskriterien ausgestaltet werden. Generell ist es vorteilhaft, die Abstände zwischen stromführenden Elementen beider Polaritäten möglichst gering zu halten, um die durch diese Elemente umschlossene aktive Durchflutungsfläche zu minimieren. Dies bedeutet, dass die induktive Impedanz der stromführenden Elemente im Inneren der Energiespeichermodule minimiert werden kann. Außerdem ist es vorteilhaft, die stromführenden Elemente möglichst großflächig auszugestalten, um den Ohm'schen Widerstand zu minimieren. Weiterhin ist es vorteilhaft, die Anzahl der notwendigen Polanschlüsse der Energiespeicherzellen mit dem Gehäuse durch geeignete modulinterne Verschaltung der Energiespeicherzellen zu minimieren. Dadurch reduzieren sich die Ohm'schen Leitungswiderstände, was wiederum sowohl im Gleichstrombetrieb als auch im Wechselstrombetrieb in einer Minimierung der Ohm'schen Verluste, insbesondere aufgrund des Skineffekts, resultiert.

Die dargestellten Energiespeichermodule können beispielsweise bevorzugt in Systemen eingesetzt werden, in denen Wechselströme hoher Frequenz aus den Energiespeicherzellen entnommen werden, beispielsweise in Batteriedirektumrichtern mit Ansteuerfrequenzen oberhalb von etwa 100 Hz. In diesen Systemen kann aufgrund der Bauweise der Einfluss induktiver Impedanzbeiträge bei Wechselstrombetrieb minimiert werden. Gleichzeitig verbessert sich das Ansprechverhalten der Energiespeichermodule im Kurzzeitbereich, was die Dynamik und Zuverlässigkeit der Systeme erheblich verbessert.

Fig. 6 zeigt eine schematische Darstellung eines Verfahrens 60 zum Herstellen eines elektrischen Energiespeichermoduls, insbesondere eines der in den Fig. 3 bis 5 schematisch gezeigten Energiespeichermodule 30, 40 oder 50. In einem ersten Schritt 61 erfolgt Anordnen einer Vielzahl von Energiespeicherzellen 10, 20, welche jeweils Elektrodenelemente 2 und ein Zellgehäuse 1 aufweisen, und wobei die Elektrodenelemente 2 mit jeweils einem von zwei an gegenüberliegenden Seitenflächen des Zellgehäuses 1 ausgebildeten Zellpolanschlüssen 1a, 1b elektrisch verbunden sind, zu mindestens einem Speicherzellstapel 7 oder 7a, 7b. In einem zweiten Schritt 62 erfolgt ein elektrisches Kontaktieren der Vielzahl von Energiespeicherzellen 10, 20 in dem Speicherzellstapel 7 oder 7a, 7b derart, dass jeweils zwei Zellpolanschlüsse 1a, 1b benachbarter Energiespeicherzellen 10, 20 unterschiedlicher Polarität flächig miteinander elektrisch verbunden sind.

Dabei können die Zellpolanschlüsse 1a, 1b beispielsweise durch ein Schweißverfahren, ein Spritzverfahren, ein Sputterverfahren oder ein Klebverfahren miteinander kontaktiert werden. Vorzugweise ist dabei der elektrische Widerstand der Verbindungsstelle zwischen den jeweiligen Zellpolanschlüssen 1a, 1b so gering wie möglich zu halten.

Die Elektrodenelemente 2 können in den Energiespeicherzellen 10, 20 beispielsweise vor in geeigneter Weise gestapelt, gefaltet oder gewickelt werden, je nach gewünschter Zelltopologie. Beispielsweise können für eine sogenannte Pouch-Zelle die Elektrodenelemente 2 unter Verwendung einer isolierenden Separatorschicht in mäanderförmigen Bahnen aufeinander gefaltet bzw. geschichtet werden. Für die Ausgestaltung einer prismatischen Zelle kann beispielsweise eine "racetrack pancake"-Topologie oder eine "racetrack double pancake"-Topologie verwendet werden, das heißt, eine flache spiralförmige Wicklung von Elektrodenelementen 2, welche entlang einer Querschnittsrichtung der entstehenden Wicklung gestaucht bzw. komprimiert werden kann, um eine "racetrack"-Form, das heißt, eine über enge Außenradien verbundene, im Wesentlichen parallel verlaufende Wicklungsbahnen zu erhalten. Optional kann ein Einschließen der Speicherzellstapel 7 oder 7a, 7b in einem Modulgehäuse erfolgen.

## Patentansprüche

1. Elektrisches Energiespeichermodul (30), mit:
mindestens einem Speicherzellstapel (7), welcher aufweist:
eine Vielzahl von Energiespeicherzellen (10; 20), welche jeweils Elektrodenelemente (2) und ein Zellgehäuse (1) aufweisen,
wobei die Elektrodenelemente (2) mit jeweils einem von zwei an gegenüberliegenden Seitenflächen des Zellgehäuses (1) ausgebildeten Zellpolanschlüssen (1a; 1b) elektrisch verbunden sind, und
wobei die Vielzahl von Energiespeicherzellen (10; 20) in dem Speicherzellstapel (7) seriell derart angeordnet sind, dass jeweils zwei Zellpolanschlüsse (1a; 1b) benachbarter Energiespeicherzellen (10; 20) unterschiedlicher Polarität in direktem physischem Kontakt stehend flächig miteinander elektrisch verbunden sind, weiterhin mit:
einem flächigen Kontaktelement (3a), welches eine an einer ersten Endfläche des Speicherzellstapels (7) angeordnete Energiespeicherzelle (20) an dem der ersten Endfläche zugewandten Zellpolanschluss (1a) elektrisch kontaktiert; und
einem ersten flächigen Polkontaktanschluss (5b), welcher eine an einer zweiten, der ersten Endfläche gegenüberliegenden Endfläche des Speicherzellstapels (7) angeordnete Energiespeicherzelle (20) an dem der zweiten Endfläche zugewandten Zellpolanschluss (1b) elektrisch kontaktiert,
**gekennzeichnet durch** einen flächigen Kontaktverbinder (4), welcher an einer Seitenfläche des Speicherzellstapels (7) angeordnet ist, und welcher das flächige Kontaktelement (3a) elektrisch kontaktiert.

2. Elektrisches Energiespeichermodul (30) nach Anspruch 1, weiterhin mit:
einem ersten flächigen Polanschluss (6b), welcher an einer Seitenfläche des Speicherzellstapels (7) angeordnet ist, und welcher den ersten flächigen Polkontaktanschluss (5b) elektrisch kontaktiert;
einem zweiten flächigen Polkontaktanschluss (5a), welcher an der zweiten Endfläche des Speicherzellstapels (7) flächig parallel zu dem ersten flächigen Polkontaktanschluss (5b) angeordnet ist, und welcher den flächigen Kontaktverbinder (4) elektrisch kontaktiert; und
einem zweiten flächigen Polanschluss (6a), welcher parallel zu dem ersten flächigen Polanschluss (6b) entlang der Seitenfläche des Speicherzellstapels (7) geführt ist, und welcher den ersten flächigen Polkontaktanschluss (5b) elektrisch kontaktiert.

3. Elektrisches Energiespeichermodul (40; 50), mit:
mindestens einem Speicherzellstapel (7a; 7b), welcher aufweist:
eine Vielzahl von Energiespeicherzellen (10; 20), welche jeweils Elektrodenelemente (2) und ein Zellgehäuse (1) aufweisen,
wobei die Elektrodenelemente (2) mit jeweils einem von zwei an gegenüberliegenden Seitenflächen des Zellgehäuses (1) ausgebildeten Zellpolanschlüssen (1a; 1b) elektrisch verbunden sind, und
wobei die Vielzahl von Energiespeicherzellen (10; 20) in dem Speicherzellstapel (7a; 7b) seriell derart angeordnet sind, dass jeweils zwei Zellpolanschlüsse (1a; 1b) benachbarter Energiespeicherzellen (10; 20) unterschiedlicher Polarität in direktem physischem Kontakt stehend flächig miteinander elektrisch verbunden sind, wobei das elektrische Energiespeichermodul (40; 50) weiterhin zwei an den Seitenflächen aneinander angrenzende Speicherzellstapel (7a; 7b), jeweils mit einer Vielzahl von Energiespeicherzellen (10; 20), welche jeweils Elektrodenelemente (2) und ein Zellgehäuse (1) aufweisen, aufweist,
wobei die Elektrodenelemente (2) mit jeweils einem von zwei an gegenüberliegenden Seitenflächen des Zellgehäuses (1) ausgebildeten Zellpolanschlüssen (1a; 1b) elektrisch verbunden sind, und
wobei die Vielzahl von Energiespeicherzellen (10; 20) in den zwei Speicherzellstapeln (7a; 7b) entlang der Erstreckungsrichtung der Speicherzellstapel (7a; 7b) eine unterschiedliche Abfolge der Polaritäten der Zellpolanschlüsse (1a; 1b) aufweisen, weiterhin mit:
einem flächigen Kontaktelement (3b), welches zwei an einer ersten Endfläche der zwei Speicherzellstapel (7a; 7b) angeordnete Energiespeicherzellen (10; 20) an den der ersten Endfläche zugewandten Zellpolanschlüssen (1a) elektrisch miteinander verbindet,
**gekennzeichnet durch** einen ersten flächigen Polkontaktanschluss (5b), welcher eine an einer zweiten, der ersten Endfläche gegenüberliegenden Endfläche des einen der beiden Speicherzellstapel (7b) angeordnete Energiespeicherzelle (10; 20) an dem der zweiten Endfläche zugewandten Zellpolanschluss (1b) elektrisch kontaktiert; und einem zweiten flächigen Polkontaktanschluss (5a), welcher eine an der zweiten Endfläche des anderen der beiden Speicherzellstapel (7a) angeordnete Energiespeicherzelle (10; 20) an dem der zweiten Endfläche zugewandten Zellpolanschluss (1a) elektrisch kontaktiert.

4. Elektrisches Energiespeichermodul (40; 50) nach einem der Ansprüche 2 und 4, weiterhin mit:
einer Isolationsschicht (8), welche zwischen dem ersten flächigen Polkontaktanschluss (5b) und dem zweiten flächigen Polkontaktanschluss (5b) zum galvanischen Isolieren der Polkontaktanschlüsse (5a; 5b) angeordnet ist.

5. Elektrisches Energiespeichermodul (30; 40; 50) nach einem der Ansprüche 1 bis 4, wobei die Zellgehäuse (1) der Energiespeicherzellen (10; 20) einen Teilbereich zwischen den Zellpolanschlüssen (1a; 1b) aufweisen, welcher elektrisch nicht oder nur geringfügig leitfähig ist.

6. Elektrisches Energiespeichermodul (30; 40; 50) nach einem der Ansprüche 1 bis 5, wobei die Elektrodenelemente (2) der Energiespeicherzellen (10; 20) spiralförmig ineinander gewickelt sind.

7. Elektrisches Energiespeichermodul (30; 40; 50) nach einem der Ansprüche 1 bis 6, wobei die Elektrodenelemente (2) der Energiespeicherzellen (10; 20) als Elektrodenstapel ausgebildet sind.

8. Verfahren (60) zum Herstellen eines elektrischen Energiespeichermoduls (30), mit den Schritten:
Anordnen (61) einer Vielzahl von Energiespeicherzellen (10; 20), welche jeweils Elektrodenelemente (2) und ein Zellgehäuse(1) aufweisen, und wobei die Elektrodenelemente (2) mit jeweils einem von zwei an gegenüberliegenden Seitenflächen des Zellgehäuses (1) ausgebildeten Zellpolanschlüssen (1a; 1b) elektrisch verbunden sind, zu mindestens einem Speicherzellstapel (7); und
elektrisches Kontaktieren (62) der Vielzahl von Energiespeicherzellen (10; 20) in dem Speicherzellstapel (7) derart, dass jeweils zwei Zellpolanschlüsse (1a; 1b) benachbarter Energiespeicherzellen (10; 20) unterschiedlicher Polarität in direktem physischem Kontakt stehend flächig miteinander elektrisch verbunden sind, weiterhin
Anordnen eines flächigen Kontaktelements (3a) derart, dass das flächige Kontaktelement (3a) eine an einer ersten Endfläche des Speicherzellstapels (7) angeordnete Energiespeicherzelle (20) an dem der ersten Endfläche zugewandten Zellpolanschluss (1a) elektrisch kontaktiert; und
Anordnen eines ersten flächigen Polkontaktanschluss (5b) derart, dass der flächige Polkontaktanschluss (5b) eine an einer zweiten, der ersten Endfläche gegenüberliegenden Endfläche des Speicherzellstapels (7) angeordnete Energiespeicherzelle (20) an dem der zweiten Endfläche zugewandten Zellpolanschluss (1b) elektrisch kontaktiert, **gekennzeichnet durch** Anordnen eines flächigen Kontaktverbinders (4) derart, dass der flächige Kontaktverbinder (4) an einer Seitenfläche des Speicherzellstapels (7) angeordnet ist, und welcher das flächige Kontaktelement (3a) elektrisch kontaktiert.

9. Verfahren (60) zum Herstellen eines elektrischen Energiespeichermoduls (40; 50), mit den Schritten:
Anordnen (61) einer Vielzahl von Energiespeicherzellen (10; 20), welche jeweils Elektrodenelemente (2) und ein Zellgehäuse (1) aufweisen, und wobei die Elektrodenelemente (2) mit jeweils einem von zwei an gegenüberliegenden Seitenflächen des Zellgehäuses (1) ausgebildeten Zellpolanschlüssen (1a; 1b) elektrisch verbunden sind, zu mindestens einem Speicherzellstapel (7a; 7b); und elektrisches Kontaktieren (62) der Vielzahl von Energiespeicherzellen (10; 20) in dem Speicherzellstapel (7a; 7b) derart, dass jeweils zwei Zellpolanschlüsse (1a; 1b) benachbarter Energiespeicherzellen (10; 20) unterschiedlicher Polarität in direktem physischem Kontakt stehend flächig miteinander elektrisch verbunden sind, wobei das Eelektrische Energiespeichermodul (40; 50) weiterhin zwei an den Seitenflächen aneinander angrenzende Speicherzellstapel (7a; 7b), jeweils mit einer Vielzahl von Energiespeicherzellen (10; 20), welche jeweils Elektrodenelemente (2) und ein Zellgehäuse (1) aufweisen, aufweist,
wobei die Elektrodenelemente (2) mit jeweils einem von zwei an gegenüberliegenden Seitenflächen des Zellgehäuses (1) ausgebildeten Zellpolanschlüssen (1a; 1b) elektrisch verbunden sind, und
wobei die Vielzahl von Energiespeicherzellen (10; 20) in den zwei Speicherzellstapeln (7; 7a; 7b) entlang der Erstreckungsrichtung der Speicherzellstapel (7; 7a; 7b) eine unterschiedliche Abfolge der Polaritäten der Zellpolanschlüsse (1a; 1b) aufweisen, weiterhin
Anordnen eines flächigen Kontaktelement (3b) derart, dass das flächige Kontaktelement (3b) zwei an einer ersten Endfläche der zwei Speicherzellstapel (7a; 7b) angeordnete Energiespeicherzellen (10; 20) an den der ersten Endfläche zugewandten Zellpolanschlüssen (1a) elektrisch miteinander verbindet,
**gekennzeichnet durch** Anordnen eines ersten flächigen Polkontaktanschluss (5b) derart, dass der flächige Polkontaktanschluss (5b) eine an einer zweiten, der ersten Endfläche gegenüberliegenden Endfläche des einen der beiden Speicherzellstapel (7b) angeordnete Energiespeicherzelle (10; 20) an dem der zweiten Endfläche zugewandten Zellpolanschluss (1b) elektrisch kontaktiert; und einem zweiten flächigen Polkontaktanschluss (5a), welcher eine an der zweiten Endfläche des anderen der beiden Speicherzellstapel (7a) angeordnete Energiespeicherzelle (10; 20) an dem der zweiten Endfläche zugewandten Zellpolanschluss (1a) elektrisch kontaktiert.

## Claims

1. Electrical energy storage module (30), having:
at least one storage cell stack (7), which has:
a multiplicity of energy storage cells (10; 20), which each have electrode elements (2) and a cell housing (1), wherein the electrode elements (2) are electrically connected to in each case one of two cell pole connections (1a; 1b) formed at opposite side faces of the cell housing (1), and
wherein the multiplicity of energy storage cells (10; 20) are arranged in series in the storage cell stack (7) in such a way that in each case two cell pole connections (1a; 1b) of adjacent energy storage cells (10; 20) of different polarity in direct physical contact are electrically connected to one another in planar fashion, furthermore having:
a planar contact element (3a), which makes electrical contact with an energy storage cell (20), which is arranged at a first end face of the storage cell stack (7), at the cell pole connection (1a) facing the first end face; and
a first planar pole contact connection (5b), which makes electrical contact with an energy storage cell (20), which is arranged at a second end face of the storage cell stack (7), which second end face is located opposite the first end face, at the cell pole connection (1b) facing the second end face,
**characterized by** a planar contact connector (4), which is arranged at a side face of the storage cell stack (7) and which makes electrical contact with the planar contact element (3a).

2. Electrical energy storage module (30) according to Claim 1, furthermore having:
a first planar pole connection (6b), which is arranged at a side face of the storage cell stack (7) and which makes electrical contact with the first planar pole contact connection (5b);
a second planar pole contact connection (5a), which is arranged at the second end face of the storage cell stack (7) in planar fashion in parallel with the first planar pole contact connection (5b) and which makes electrical contact with the planar contact connector (4); and
a second planar pole connection (6a), which is guided in parallel with the first planar pole connection (6b) along the side face of the storage cell stack (7) and which makes electrical contact with the first planar pole contact connection (5b).

3. Electrical energy storage module (40; 50), having:
at least one storage cell stack (7a; 7b), which has:
a multiplicity of energy storage cells (10; 20), which each have electrode elements (2) and a cell housing (1), wherein the electrode elements (2) are electrically connected to in each case one of two cell pole connections (1a; 1b) formed at opposite side faces of the cell housing (1), and
wherein the multiplicity of energy storage cells (10; 20) are arranged in series in the storage cell stack (7a; 7b) in such a way that in each case two cell pole connections (1a; 1b) of adjacent energy storage cells (10; 20) of different polarity in direct physical contact are electrically connected to one another in planar fashion, wherein the electrical energy storage module (40; 50) furthermore has two storage cell stacks (7a; 7b) that adjoin one another at the side faces, each having a multiplicity of energy storage cells (10; 20), which each have electrode elements (2) and a cell housing (1), wherein the electrode elements (2) are electrically connected to in each case one of two cell pole connections (1a; 1b) formed at opposite side faces of the cell housing (1), and
wherein the multiplicity of energy storage cells (10; 20) in the two storage cell stacks (7a; 7b) have a different sequence of polarities of the cell pole connections (1a; 1b) along the direction of extent of the storage cell stacks (7a; 7b), furthermore having:
a planar contact element (3b), which electrically connects two energy storage cells (10; 20), which are arranged at a first end face of the two storage cell stacks (7a; 7b), to one another at the cell pole connections (1a) facing the first end face,
**characterized by** a first planar pole contact connection (5b), which makes electrical contact with an energy storage cell (10; 20) arranged at a second end face of one of the two storage cell stacks (7b), which second end face is located opposite the first end face, at the cell pole connection (1b) facing the second end face; and a second planar pole contact connection (5a), which makes electrical contact with an energy storage cell (10; 20) arranged at the second end face of the other of the two storage cell stacks (7a) at the cell pole connection (1a) facing the second end face.

4. Electrical energy storage module (40; 50) according to either of Claims 2 and 4, furthermore having:
an insulation layer (8), which is arranged between the first planar pole contact connection (5b) and the second planar pole contact connection (5b) for galvanic insulation of the pole contact connections (5a; 5b).

5. Electrical energy storage module (30; 40; 50) according to one of Claims 1 to 4, wherein the cell housings (1) of the energy storage cells (10; 20) have a subregion between the cell pole connections (1a; 1b), which subregion is electrically non-conductive or only slightly electrically conductive.

6. Electrical energy storage module (30; 40; 50) according to one of Claims 1 to 5, wherein the electrode elements (2) of the energy storage cells (10; 20) are wound into one another in a spiral shape.

7. Electrical energy storage module (30; 40; 50) according to one of Claims 1 to 6, wherein the electrode elements (2) of the energy storage cells (10; 20) are designed as electrode stacks.

8. Method (60) for producing an electrical energy storage module (30), having the following steps:
arrangement (61) of a multiplicity of energy storage cells (10; 20), which each have electrode elements (2) and a cell housing (1), and wherein the electrode elements (2) are electrically connected to in each case one of two cell pole connections (1a; 1b) formed at opposite side faces of the cell housing (1) to form at least one storage cell stack (7); and
electrical contact-making (62) between the multiplicity of energy storage cells (10; 20) in the storage cell stack (7) in such a way that in each case two cell pole connections (1a; 1b) of adjacent energy storage cells (10; 20) of different polarity in direct physical contact are electrically connected to one another in planar fashion, furthermore
arrangement of a planar contact element (3a) in such a way that the planar contact element (3a) makes electrical contact with an energy storage cell (20), which is arranged at a first end face of the storage cell stack (7), at the cell pole connection (1a) facing the first end face; and
arrangement of a first planar pole contact connection (5b) in such a way that the planar pole contact connection (5b) makes electrical contact with an energy storage cell (20), which is arranged at a second end face of the storage cell stack (7), which second end face is located opposite the first end face, at the cell pole connection (1b) facing the second end face, **characterized by** arrangement of a planar contact connector (4) in such a way that the planar contact connector (4) is arranged at a side face of the storage cell stack (7) and which makes electrical contact with the planar contact element (3a).

9. Method (60) for producing an electrical energy storage module (40; 50), having the following steps:
arrangement (61) of a multiplicity of energy storage cells (10; 20), which each have electrode elements (2) and a cell housing (1), and wherein the electrode elements (2) are electrically connected to in each case one of two cell pole connections (1a; 1b) formed at opposite side faces of the cell housing (1) to form at least one storage cell stack (7a; 7b); and
electrical contact-making (62) between the multiplicity of energy storage cells (10; 20) in the storage cell stack (7a; 7b) in such a way that in each case two cell pole connections (1a; 1b) of adjacent energy storage cells (10; 20) of different polarity in direct physical contact are electrically connected to one another in planar fashion, wherein the electrical energy storage module (40; 50) furthermore has two storage cell stacks (7a; 7b) that adjoin one another at the side faces, each having a multiplicity of energy storage cells (10; 20), which each have elements (2) and a cell housing (1),
wherein the electrode elements (2) are electrically connected to in each case one of two cell pole connections (1a; 1b) formed at opposite side faces of the cell housing (1), and
wherein the multiplicity of energy storage cells (10; 20) in the two storage cell stacks (7; 7a; 7b) have a different sequence of polarities of the cell pole connections (1a; 1b) along the direction of extent of the storage cell stacks (7; 7a; 7b), furthermore arrangement of a planar contact element (3b) in such a way that the planar contact element (3b) connects two energy storage cells (10; 20), which are arranged at a first end face of the two storage cell stacks (7a; 7b), to one another at the cell pole connections (1a) facing the first end face,
**characterized by** arrangement of a first planar pole contact connection (5b) in such a way that the planar pole contact connection (5b) makes electrical contact with an energy storage cell (10; 20), which is arranged at a second end face of one of the two storage cell stacks (7b), which second end face is located opposite the first end face, at the cell pole connection (1b) facing the second end face; and
a second planar pole contact connection (5a), which makes electrical contact with an energy storage cell (10; 20), which is arranged at the second end face of the other of the two storage cell stacks (7a), at the cell pole connection (1a) facing the second end face.

## Revendications

1. Module accumulateur d'énergie électrique (30), comprenant :
au moins un empilement de cellules accumulatrices (7) qui comporte :
une pluralité de cellules accumulatrices d'énergie (10 ; 20) comportant chacune des éléments d'électrode (2) et un boîtier de cellule (1),
les éléments d'électrode (2) étant reliés chacun électriquement à une des deux bornes polaires de cellule (1a ; 1b) formées sur des surfaces latérales opposées du boîtier de cellule (1), et
la pluralité de cellules accumulatrices d'énergie (10 ; 20) étant disposées en série dans l'empilement de cellules accumulatrices (7) de telle sorte que deux bornes polaires de cellule (la, 1b) de cellules accumulatrices d'énergie adjacentes (10 ; 20) de polarités différentes soient reliées électriquement entre elles en contact physique direct de manière bidimensionnelle, et comprenant en outre :
un élément de contact bidimensionnel (3a) qui est en contact électrique avec une cellule accumulatrice d'énergie (20), disposée sur une première surface d'extrémité de l'empilement de cellules accumulatrices (7), au niveau de la borne polaire de cellule (1a) dirigée vers la première surface d'extrémité ; et
une première borne de contact polaire bidimensionnelle (5b) qui est en contact électrique avec une cellule accumulatrice d'énergie (20), disposée sur une deuxième surface d'extrémité, opposée à la première surface d'extrémité, de l'empilement de cellules accumulatrices (7), au niveau de la borne polaire de cellule (1b) dirigée vers la deuxième surface d'extrémité,
**caractérisé par** un connecteur de contact bidimensionnel (4) qui est disposé sur une surface latérale de l'empilement de cellules accumulatrices (7) et qui est en contact électrique avec l'élément de contact bidimensionnel (3a).

2. Module accumulateur d'énergie électrique (30) selon la revendication 1, comprenant en outre :
une première borne polaire bidimensionnelle (6b) qui est disposé sur une surface latérale de l'empilement de cellules accumulatrices (7) et qui est en contact électrique avec la première borne de contact polaire (5b) ;
une deuxième borne de contact polaire bidimensionnelle (5a) qui est sur la deuxième surface d'extrémité de l'empilement de cellules accumulatrices (7) de manière bidimensionnelle parallèlement à la première borne de contact polaire bidimensionnelle (5b) et qui est en contact électrique avec le connecteur de contact bidimensionnel (4) ; et
une deuxième borne polaire bidimensionnelle (6a) qui s'étend parallèlement à la première borne polaire bidimensionnelle (6b) le long de la surface latérale de l'empilement de cellules accumulatrices (7) et qui est en contact électrique avec la première borne de contact polaire bidimensionnelle (5b).

3. Module accumulateur d'énergie électrique (40 ; 50) comprenant :
au moins un empilement de cellules accumulatrices (7a ; 7b) qui comporte une pluralité de cellules accumulatrices d'énergie (10 ; 20) qui comportent chacune des éléments d'électrode (2) et un boîtier de cellule (1),
les éléments d'électrode (2) étant chacun reliés électriquement à une des deux bornes polaires de cellule (1a ; 1b) formées sur des surfaces latérales opposées du boîtier de cellule (1), et
la pluralité de cellules accumulatrices d'énergie (10 ; 20) sont disposées en série dans l'empilement de cellules accumulatrices (7a ; 7b) de telle sorte que deux bornes polaires de cellule (1a ; 1b) de cellules accumulatrices d'énergie adjacentes (10 ; 20) de polarités différentes soient reliées électriquement entre elles en contact physique direct de manière bidimensionnelle, le module accumulateur d'énergie électrique (40 ; 50) comportant en outre deux empilements de cellules accumulatrices (7a ; 7b) adjacents l'un à l'autre sur les surfaces latérales et comportant chacun une pluralité de cellules accumulatrices d'énergie (10 ; 20) qui comportent chacune des éléments d'électrode (2) et un boîtier de cellule (1),
les éléments d'électrode (2) étant reliés chacun électriquement à une des deux bornes polaires de cellule (1a ; 1b) formées sur des surfaces latérales opposées du boîtier de cellule (1), et
la pluralité de cellules accumulatrices d'énergie (10 ; 20) comportant dans les deux empilements de cellules accumulatrices (7a ; 7b) dans la direction d'extension de l'empilement de cellules accumulatrices (7a ; 7b) une succession différente des polarités des bornes polaires de cellule (1a ; 1b), et comprenant en outre :
un élément de contact bidimensionnel (3b) qui relie deux cellules accumulatrices d'énergie (10 ; 20) entre elles, disposées sur une première surface d'extrémité des deux empilements de cellules accumulatrices (7a ; 7b), au niveau des bornes polaires de cellule (1a) dirigées vers la première surface d'extrémité,
**caractérisé par** une première borne de contact polaire bidimensionnelle (5b) qui est en contact électrique avec une cellule accumulatrice d'énergie (10 ; 20) disposée sur une deuxième surface d'extrémité, opposée à la première surface d'extrémité, de l'un (7b) des deux empilements de cellules accumulatrices, au niveau de la borne polaire de cellule (1b) dirigée vers la deuxième surface d'extrémité ; et par une deuxième borne de contact polaire bidimensionnelle (5a) qui est en contact électrique avec une cellule accumulatrice d'énergie (10 ; 20), disposée sur la deuxième surface d'extrémité de l'autre (7a) des deux empilements de cellules accumulatrices, au niveau de la borne polaire de cellule (1a) dirigée vers la deuxième surface d'extrémité.

4. Module accumulateur d'énergie électrique (40 ; 50) selon l'une des revendications 2 et 4, comprenant en outre :
une couche d'isolation (8) qui est disposée entre la première borne de contact polaire bidimensionnelle (5b) et la deuxième borne de contact polaire bidimensionnelle (5b) pour isoler galvaniquement les bornes de contact polaires (5a ; 5b).

5. Module accumulateur d'énergie électrique (30 ; 40 ; 50) selon l'une des revendications 1 à 4, dans lequel le boîtier de cellule (1) des cellules accumulatrices d'énergie (10 ; 20) comporte une zone située entre les bornes de contact polaires (1a ; 1b) qui n'est pas électriquement conductrice ou qui est seulement légèrement électriquement conductrice.

6. Module accumulateur d'énergie électrique (30 ; 40 ; 50) selon l'une des revendications 1 à 5, dans lequel les éléments d'électrode (2) des cellules accumulatrices d'énergie (10 ; 20) sont enroulés l'un dans l'autre en spirale.

7. Module accumulateur d'énergie électrique (30 ; 40 ; 50) selon l'une des revendications 1 à 6, dans lequel les éléments d'électrode (2) des cellules accumulatrices d'énergie (10 ; 20) sont conçus comme des empilements d'électrodes.

8. Procédé (60) de fabrication d'un module accumulateur d'énergie électrique (30) comprenant les étapes suivantes :
disposer (61) une pluralité de cellules accumulatrices d'énergie (10 ; 20) comportant chacune des éléments d'électrode (2) et un boîtier de cellule (1), et les éléments d'électrode (2) étant reliés chacun électriquement à une des deux bornes polaires de cellule (1a ; 1b), formées sur des surfaces latérales opposées du boîtier de cellule (1), pour former au moins un empilement de cellules accumulatrices (7) ; et
mettre en contact électrique (62) la pluralité de cellules accumulatrices d'énergie (10 ; 20) dans l'empilement de cellules accumulatrices (7) de telle sorte que deux bornes polaires de cellule (1a ; 1b) de cellules accumulatrices d'énergie adjacentes (10 ; 20) de polarités différentes soient reliées électriquement entre elles en contact physique direct de manière bidimensionnelle, et en outre
disposer un élément de contact bidimensionnel (3a) de telle sorte que l'élément de contact bidimensionnel (3a) soit en contact électrique avec une cellule accumulatrice d'énergie (20), disposée sur une première surface d'extrémité de l'empilement de cellules accumulatrices (7), au niveau de la borne polaire de cellule (1a) dirigée vers la première surface d'extrémité ; et
disposer une première borne de contact polaire bidimensionnelle (5b) de telle sorte que la première borne de contact polaire bidimensionnelle (5b) soit en contact électrique avec une cellule accumulatrice d'énergie (20), disposée sur une deuxième surface d'extrémité, opposée à la première surface d'extrémité, de l'empilement de cellules accumulatrices (7), au niveau de la borne polaire de cellule (1b) dirigée vers la deuxième surface d'extrémité,
**caractérisé par** la disposition d'un connecteur de contact bidimensionnel (4) de telle sorte que le connecteur de contact bidimensionnel (4) soit disposé sur une surface latérale de l'empilement de cellules accumulatrices (7) et soit en contact électrique avec l'élément de contact bidimensionnel (3a).

9. Procédé (60) de fabrication d'un module accumulateur d'énergie électrique (40 ; 50) comprenant les étapes suivantes :
disposer (61) une pluralité de cellules accumulatrices d'énergie (10 ; 20) comportant chacune des éléments d'électrode (2) et un boîtier de cellule (1), et les éléments d'électrode (2) étant reliés chacun électriquement à une des deux bornes polaires de cellule (1a ; 1b), formées sur des surfaces latérales opposées du boîtier de cellule (1), pour former au moins un empilement de cellules accumulatrices (7a ; 7b) ; et
mettre en contact électrique (62) la pluralité de cellules accumulatrices d'énergie (10 ; 20) dans l'empilement de cellules accumulatrices (7a ; 7b) de telle sorte que deux bornes polaires de cellule (1a ; 1b) de cellules accumulatrices d'énergie adjacentes (10 ; 20) de polarités différentes soient reliées électriquement entre elles en contact physique direct de manière bidimensionnelle, le module accumulateur d'énergie électrique (40 ; 50) comportant en outre deux empilements de cellules accumulatrices (7a ; 7b) adjacents l'un à l'autre sur les surfaces latérales et comportant chacun une pluralité de cellules accumulatrices d'énergie (10 ; 20) qui comportent chacune des éléments d'électrode (2) et un boîtier de cellule (1), les éléments d'électrode (2) étant reliés chacun électriquement à une des deux bornes polaires de cellule (1a ; 1b) formées sur des surfaces latérales opposées du boîtier de cellule (1), et la pluralité de cellules accumulatrices d'énergie (10 ; 20) comportant dans les deux empilements de cellules accumulatrices (7 ; 7a ; 7b) dans la direction d'extension de l'empilement de cellules accumulatrices (7 ; 7a ; 7b) une succession différente des polarités des bornes polaires de cellule (1a ; 1b), et en outre :
disposer un élément de contact bidimensionnel (3b) de telle sorte que l'élément de contact bidimensionnel (3b) relie deux cellules accumulatrices d'énergie (10 ; 20) entre elles, disposées sur une première surface d'extrémité des deux empilements de cellules accumulatrices (7a ; 7b), au niveau des bornes polaires de cellule (1a) dirigées vers la première surface d'extrémité,
**caractérisé par** la disposition d'une première borne de contact polaire bidimensionnelle (5b) de telle sorte que la première borne de contact polaire bidimensionnelle (5b) soit en contact électrique avec une cellule accumulatrice d'énergie (10 ; 20) disposée sur une deuxième surface d'extrémité, opposée à la première surface d'extrémité, de l'un (7b) des deux empilements de cellules accumulatrices, au niveau de la borne polaire de cellule (1b) dirigée vers la deuxième surface d'extrémité ; et d'une deuxième borne de contact polaire bidimensionnelle (5a) qui est en contact électrique avec une cellule accumulatrice d'énergie (10 ; 20), disposée sur la deuxième surface d'extrémité de l'autre (7a) des deux empilements de cellules accumulatrices, au niveau de la borne polaire de cellule (la) dirigée vers la deuxième surface d'extrémité.
